# EUROPEAN PATENT APPLICATION

(11) **EP 1 014 736 A1**
(43) Date of publication of application: **28.06.2000**
(21) Application number: 98124517.8
(22) Date of filing: 22.12.1998
(51) Int. Cl.: H04Q 7/30

(54) **Multiple access communication system, and method for managing a multiple access communication system**

(71) Applicant: TELEFONAKTIEBOLAGET LM ERICSSON (publ), 126 25 Stockholm (SE)
(72) Inventor: Geulen, Eckhard, 6462 CH Kerkrade (NL)
(74) Representative: Mohsler, Gabriele

(57) **Abstract**

The invention relates to a multiple access communication system comprising a base station subsystem (BSS) with at least one base station controller (BSC), which is an access node for at least one mobile user of a first type, capable of communicating according to a first protocol and at least one base transceiver station (BTS).

According to the invention the communication system contains at least one second access for at least one mobile user of a second type communicating according to a first protocol.

The invention further relates to a method for managing a multiple access communication system, wherein at least one access node of a first type interfaces with at least one mobile user of a first type, wherein the access node and the mobile user of the first type communicate according to a first protocol, which is carried out in a way that at least one access node of a second type interfaces with at least one mobile user equipment of a second type.

## Description

The present invention relates to a communication system comprising a base station subsystem with at least one base station controller, which is an access node for at least one mobile user of a first type, capable of communicating according to a first protocol and at least one base transceiver station.

The invention further relates to a method for managing a multiple access communication system, wherein at least one access node of a first type interfaces with at least one mobile user of a first type, wherein the access node and the mobile user of the first type communicate according to a first protocol.

The invention particularly relates to the problem of how a mobile user who is capable of communicating in an extended network communicates within a separate area such as an office building.

Known solutions for the problem of giving access of this mobile user to the communication system of a building or an industrial area are dual-mode mobile telephones, which are, for example, capable of communicating in GSM standard as well as in DECT (Digital Enhanced Cordless Telephony) standard.

The existing solutions require especially equipped mobile telephones or other mobile communication units being able to use both systems. In addition, means to be able to switch between the different systems have to be foreseen.

Therefore it is an object of the present invention to create a communication system, which allows mobile user equipment of a communication system of one standard to have access to a communication system operating according to another standard.

This is advantageously achieved by the communication system according to claim 1 and by the method according to claim 7.

According to the invention, the problem is solved by a communication system comprising a base station subsystem with at least one base station controller, which is an access node for at least one mobile user of a first type, capable of communicating according to a first protocol and at least one base transceiver station, characterised in that the communication system contains at least one second access for at least one mobile user of a second type capable of communicating according to a fist protocol.

Moreover, the communication system enables mobile user equipment of the second type, and in particular mobile user equipment that normally communicate with a more extended network, to communicate within the more restricted network.

However, the invention also permits mobile user equipment adapted to a communication system of a first standard to gain access to a communication system of a second standard.

An example of a more complex solution is a use of mobile terminals according to the GSM 1800 standard within another network, operating preferably at the same frequency.

The invention makes use of the idea that communication between base stations of a communication system and mobile user equipment can be adapted to mobile user equipment communicating according to a different standard by equipping the existing communication system with characteristics of the communication protocol of the second standard.

This idea is implemented in the aforementioned communication system as well as in a method for communicating over a network between at least one user equipment of a first type and a base station subsystem comprising the steps of: transmitting one of a first group of network protocol data units between the mobile user equipment of the first type and the base station subsystem, which is carried out in such a way, that at least one mobile user of a second type receives and/or sends information to the base station subsystem.

The mobile user equipment is, for example, a mobile terminal such as a hand-held computer, a notebook-computer, a mobile telephone or a mobile multimedia system.

In a preferred embodiment of the invention the access node for the mobile user of the first type works with a protocol different from the protocol for the second type of mobile user.

In an advantageous implementation of the communication system, and the method, the base transceiver station and the mobile user equipment of the first type work with information, which is transported in packets.

In a preferred embodiment of the communication system, and the method, an efficient use of resources of the communication system is achieved by implementing a logical node, wherein the logical node transfers information transmitted to and/or from mobile user equipment of the second type into transferred packets.

An efficient handling of communication flow is achieved in that the transformed packet has a similar structure as the packets in which information is transmitted between the Base transceiver stations and the mobile user equipment of the first type.

An increased efficiency of the communication system is achieved by the above-mentioned transfer of information sent to or received from the mobile user equipment into transferred packets that are similar to the packets in which information is transported between the mobile user equipment of the first type and the corresponding base transceiver stations. However, it is most advantageous, that the transferred packets are transferred in a way which gives them the same structure as the packets in which information to and/or from the mobile user equipment of the first type is transferred.

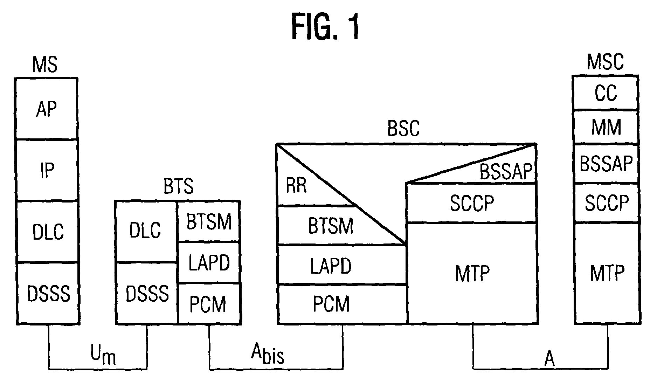

Further advantages and preferred embodiments of the invention are included in the patent claims 2 - 6 and the claims 8 - 12 and the following description of the figure.

The invention will be described in greater detail below with reference to the attached figure, which shows a functional schematic of a protocol structure for a communication system containing IP.

The figure shows a functional schematic of an implementation of protocols and a signalling communication system.

According to the figure the present invention is described in conjunction with an indoor cellular communication system. The communication system is preferably a Wireless Local Area Network (WLAN) or a Radio Local Area Network (RLAN).

The description explains the invention with layers as they are used in the Internet Protocol (IP) or in the Open System Interconnection (OSI) reference model as has been proposed by the International Telecommunication Union (ITU). A division of the communication process in different layers is preferred for carrying out the invention. Examples of these layers are: physical layer, data link layer, network layer, transport layer, session layer, presentation layer and application layer. In the Internet Protocol, the application layer is situated over the transport layer. However, the invention is not limited to a certain standard.

The communication system comprises a Mobile services switching centre MSC, a Base station controller BSC, a Base transceiver station BTS and a Mobile user equipment, also called Mobile Station MS.

The base transceiver station and the base station controller constitute a base station subsystem BSS. The base station subsystem controls signalling on a radio lane.

The base station controller BSC uses a BSS Application Part BSSAP which receives and/or sends preferably three different types of information.

The first type of information is a Direct Transfer Application Part (DTAP) which allows a direct exchange of information between the mobile user equipment MS and the mobile services switching centre MSC.

At the interface between the mobile services switching centre MSC and the base station controller BSC, additional information is transported for the operation of the base station subsystem, the so-called Base Station System Management Application Part (BSSMAP).

Furthermore, information generated by the mobile user equipment MS is transferred.

An interface A_{bis} preferably a so called interface A_{bis} is implemented between the base station controller BSC and the base transceiver station. The interface A_{bis} uses as physical layer Pulse Code Modulation PCM, for example. At the A_{bis} interface information for a Link Access Procedure for a D-Channel LAPD is transferred. Further information for a base transceiver station management BTSM is transferred.

The base transceiver station BTS is organised in such a way that it can be operated with two different signalling schemes and/or protocol layers.

The base transceiver station is subdivided into two parts, of which the second part faces the mobile user equipment MS. The mobile user equipment MS and the base transceiver station BTS are linked via an air (radio) interface Uₘ. The first layer is a physical layer. The physical layer is selected in an order to perform optimal data transfer.

The invention is in no way limited to a special concept for the physical layer. However, it is advantageous to utilise a Direct Sequence Spread Spectrum, DSSS, or Code Division Multiple Access, CDMA, especially a Wideband CDMA, WCDMA.

Further advantageous examples of the physical layers are a Wireless Local Area Network (WLAN) with an operating frequency of preferable 2.4 GHz or a Radio Local Area Network (RLAN) with an operating frequency of preferable about 5.8 GHz, which allows a data transfer with a bit rate up to 25 Mbit/s.

A Direct Sequence Spread Spectrum DSSS is a widely recognised form of a Spread Spectrum. The Direct Sequence Spread Spectrum DSSS is a process which is performed by effectively multiplying a Radio Frequency (RF) Carrier and a Pseudo-Noise (PN) Digital Signal. First a PN code is modulated onto an information signal using one of several known modulation techniques. This process causes the radio frequency (RF) signal to be replaced by a wide bandwidth signal with the spectral equivalent of a noise signal. A demodulation process is a mixing and/or a multiplying of the same Pseudo-Noise modulated carrier with an incoming radio frequency signal. An output is a signal that is maximal when the two signals exactly equal one another or are correlated.

An implementation with a Code Division Multiple Access (CDMA) uses a Spread Spectrum Technique too. Orthogonal vectors are used for multiplying data sequences.

A data link control DLC is signalled above the physical layer. Data link control DLC may be performed at a layer 2. However, the layer 2 is only a symbol of different layers and may be constituted of many layers (sub-layers).

Further layers are situated above the Data Link Control DLC.

An Internet Protocol IP layer, which performs a packaging of data is situated above the Data Link Control DLC Layer, for example.

An application protocol AP layer is situated above the layer working according to an Internet Protocol. The application protocol AP performs a connection control and a mobility management emulation. The emulation allows a transfer of virtual control elements. The virtual control elements are generated in order to allow a transfer of information.

The base transceiver station BTS transforms protocol data units of a first type in protocol data units of a second type. The protocol data units of the second type may be called virtual protocol data units, as they are created in order to be transmitted.

Whereas an interfaces in a wired part of the network as the A_{bis} or the A Interface operates according to a first standard in accordance with the Global System for Mobile Communication (GSM) or the Universal Mobile Telecommunication System (UMTS), the second part of the network, especially the Wireless Interface Uₘ operates according to a second standard with a protocol of a second type.

The invention allows a mobile user, capable of communicating in an outer, not described network, to communicate within the additional network. The invention allows a mobile user equipment operating according to a mobile telecommunication standard to transmit its data, in particular voice or video information in a packet-mode over an indoor system.

The transmission of voice in a packet-mode over the indoor system is preferably carried out in such a way, that the mobile user obtains a high priority class in packet transmission of the indoor network in order to guarantee real time service.

The invention allows an already installed Wireless Indoor Communication System to be used for a transmission of data of different nature, for example voice or video transmission.

## Claims

1. A communication system comprising a base station subsystem (BSS) with at least one base station controller (BSC), which is an access node for at least one mobile user equipment of a first type, capable of communicating according to a first protocol and at least one base transceiver station (BTS),
characterised in that the communication system contains at least one second access for at least one mobile user equipment (MS) of a second type communicating according to a first protocol.

2. The communication system according to claim 1, characterised in that access node for the mobile user equipment (MS) of the first type works with a protocol different from the protocol for the second type of mobile user equipment.

3. The communication system according to claim 1 or 2, characterised in that the base transceiver station (BTS) and the mobile user equipment of the first type work with information which is transported in packets.

4. The communication system according to claim 3, characterised in that it contains a logical node and wherein the logical node transfers information transmitted to and/or from mobile user equipment of the second type into transferred packets.

5. The communication system according to claim 4, characterised in that the transformed packet has a similar structure as the packets in which information is transmitted between the base transceiver stations and the mobile user equipment of the first type.

6. The communication system according to any of the claims 1 to 5,
characterised in that the base transceiver station (BTS) is organised in such a way that it is operated with two different signalling schemes and/or protocol layers.

7. A method for managing a multiple access communication system, wherein at least one access node of a first type interfaces with at least one mobile user of a first type, wherein the access node and the mobile user of the first type communicate according to a first protocol, characterised in that at least one access node of a second type interfaces with at least one mobile user of a second type.

8. The method according to claim 7, characterised in that the access node for the mobile user of the first type receives and/or sends information with a protocol different from the protocol for the second type of mobile user.

9. The method according to any of the claims 7 or 8, characterised in that the mobile user of the second type receives and/or sends information according to a network protocol which is compatible with the first protocol.

10. The method according to any of the claims 7 to 9, characterised in that groups of network protocol data units are transmitted in packets.

11. The method according to claim 10, characterised in that the network protocol data units for the mobile user of the second type are transmitted in similar protocols.

12. The method according to any of the claims 7 to 11, characterised in that information transmitted to/or from mobile user equipment of the second type is transferred into transferred packets.
